# EUROPÄISCHE PATENTSCHRIFT

(11) **EP 3 415 375 B1**
(45) Veröffentlichungstag und Bekanntmachung des Hinweises auf die Patenterteilung: **12.02.2020**
(21) Anmeldenummer: 18177571.9
(22) Anmeldetag: 13.06.2018
(51) Int. Cl.: B60R 21/0136, E05B 19/00

(54) **VORRICHTUNG ZUM BETÄTIGEN EINES SIGNALGEBERS**
DEVICE FOR ACTUATING A SIGNAL TRANSMITTER
DISPOSITIF DE FONCTIONNEMENT D'UN GÉNÉRATEUR DE SIGNAUX

(30) Priorität: 16.06.2017 DE 102017113268
(43) Veröffentlichungstag der Anmeldung: 19.12.2018
(73) Patentinhaber: Witte Automotive GmbH, 42551 Velbert (DE)
(72) Erfinder: Jan, Kucera, 33442 Chlumcany (CZ); Vojtech, Cibulka, 32300 Plzen (CZ)
(74) Vertreter: Manitz Finsterwald Patent- und Rechtsanwaltspartnerschaft mbB

(56) Entgegenhaltungen:
- EP-A1- 1 808 336
- DE-A1-102005 059 061
- DE-A1-102012 015 925

## Beschreibung

Die vorliegende Erfindung betrifft eine Vorrichtung zum Betätigen eines Signalgebers, insbesondere eines Funkschlüssels eines Kraftfahrzeugs, mit einer zwischen einer Geschlossen-Stellung und einer Offen-Stellung bewegbaren Signalgeberaufnahme zur Aufnahme des Signalgebers, einem Betätigungsmittel zur Betätigung des in der Signalgeberaufnahme aufnehmbaren Signalgebers, und einem Verriegelungsmittel zur Verriegelung der Signalgeberaufnahme in der Geschlossen-Stellung.

Eine derartige Vorrichtung ist grundsätzlich bekannt und kommt beispielsweise bei der gemeinsamen Nutzung eines Kraftfahrzeugs durch mehrere Benutzer zur Anwendung (sog. Carsharing). Hierbei ermöglicht die Vorrichtung einem berechtigten Benutzer mit Hilfe eines virtuellen Schlüssels, zum Beispiel eines Mobiltelefons oder eines drahtlosen Kommunikationsmittels (z.B. RFID-Transponder), Zugang zu dem Kraftfahrzeug zu erlangen, ohne dass der Benutzer im tatsächlichen Besitz eines zum Ver- oder Entriegeln eines Türschlosses des Kraftfahrzeugs benötigten Signalgebers, wie zum Beispiel eines vom Hersteller zusammen mit dem Kraftfahrzeug bereitgestellten Funkschlüssels, ist. Zu diesem Zweck wird der Signalgeber üblicherweise in einer Signalgeberaufnahme der Vorrichtung im Inneren des Kraftfahrzeugs verwahrt, wobei ein Betätigungsmittel auf der Grundlage eines vom virtuellen Schlüssel generierten Signals den in der Signalgeberaufname aufgenommenen Signalgeber derart betätigt, dass durch ein Entriegelungssignal des Signalgebers das Türschloss des Kraftfahrzeugs entriegelt wird, woraufhin der Benutzer Zugang zum Kraftfahrzeug erhält.

Neben dieser Funktion wird der Signalgeber meist auch zum Entriegeln einer Wegfahrsperre und/oder zum Anlassen eines Motors des Kraftfahrzeugs verwendet, wozu normalerweise eine mechanische und/oder elektrische Verbindung zwischen dem Signalgeber und einem Zündschloss hergestellt werden muss. Hierfür ist es erforderlich, den Signalgeber aus der Signalgeberaufnahme zu entnehmen, wobei zur zusätzlichen Sicherheit ein Verriegelungsmittel zur Verriegelung der Signalgeberaufnahme eine Entnahme des Signalgebers durch eine unbefugte Person verhindert.

Üblicherweise sind das Betätigungsmittel und das Verriegelungsmittel separate Komponenten der Vorrichtung. Für ein koordiniertes Zusammenwirken von Betätigungsmittel und Verriegelungsmittel wird daher eine Vielzahl von Bauteilen benötigt, was sich in einer aufwendigeren Konstruktion sowie einer gesteigerten Störanfälligkeit der Vorrichtung niederschlägt und überdies einen nicht unerheblichen Kostenpunkt darstellt.

Eine Aufgabe der Erfindung besteht darin, eine Vorrichtung der vorstehend genannten Art zu schaffen, welche ebenjene Nachteile überwindet und sich durch eine einfachere Bauweise auszeichnet.

Die Aufgabe wird durch eine Vorrichtung mit den Merkmalen des Anspruchs 1 gelöst und insbesondere dadurch, dass das Betätigungsmittel und das Verriegelungsmittel eine bauliche Einheit bilden.

Der Erfindung liegt der allgemeine Gedanke zugrunde, die Anzahl von Bauteilen einer Vorrichtung zum Betätigen eines Signalgebers dadurch zu reduzieren, dass ein Betätigungsmittel zur Betätigung des in einer Signalgeberaufnahme aufgenommenen Signalgebers und ein Verriegelungsmittel zur Verriegelung der Signalgeberaufnahme eine bauliche Einheit bilden. Hieraus ergibt sich der Vorteil, einer einfacheren Konstruktion sowie einer verbesserten funktionalen Sicherheit der Vorrichtung. Ein weiterer Vorteil besteht darin, dass sich infolge einer verringerten Bauteilanzahl Herstellungskosten einsparen lassen.

Unter einer baulichen Einheit von Betätigungsmittel und Verriegelungsmittel ist zu verstehen, dass das Betätigungsmittel und das Verriegelungsmittel fest miteinander verbunden sind. Dabei ist es unerheblich, ob das Betätigungsmittel und das Verriegelungsmittel einstückig miteinander ausgebildet sind oder ob das Betätigungsmittel und das Verriegelungsmittel aus gefügten Einzelteilen zusammengesetzt sind.

Üblicherweise umfasst ein Signalgeber einen ersten Taster, welcher bei Betätigung ein Entriegelungssignal zum Entriegeln eines Türschlosses eines Kraftfahrzeugs erzeugt, und einen zweiten Taster, welcher zur Verriegelung des Türschlosses mittels eines Verriegelungssignals dient.

Vorteilhafte Ausbildungen der Erfindung sind den Unteransprüchen, der Beschreibung und den Zeichnungen zu entnehmen.

Da sich die Signalgeber je nach Hersteller und/oder Modell des Kraftfahrzeugs in ihrer Form und Größe unterscheiden können, kann die Signalgeberaufnahme eine einsetzbare Schale umfassen, welche vorteilhafterweise eine Negativform des Signalgebers darstellt und welche eine eindeutige Ausrichtung des Signalgebers bezüglich des Betätigungsmittels ermöglicht.

Die Vorrichtung kann ferner eine Kommunikationsschnittstelle umfassen, welche dazu dient, Signale eines virtuellen Schlüssels zu empfangen und/oder Signale an den virtuellen Schlüssel zu senden.

Der in der Signalgeberaufnahme aufgenommene Signalgeber kann unmittelbar durch das Betätigungsmittel betätigt werden, d.h. das Betätigungsmittel und der Signalgeber stehen bei einer Betätigung des Signalgebers in direktem Kontakt miteinander.

Es ist aber auch möglich, dass der Signalgeber mittelbar durch ein zwischen dem Betätigungsmittel und der Signalgeberaufnahme geschaltetes Übertragungsmittel betätigbar ist. Insbesondere kann das Übertragungsmittel zwischen dem Betätigungsmittel und dem in der Signalgeberaufnahme aufnehmbaren Signalgeber geschaltet sein. Das Übertragungsmittel kann beispielsweise ein reversibel auslenkbarer, insbesondere zweiseitiger, Übertragungshebel sein. Es ist aber auch denkbar, dass das Übertragungsmittel durch ein geführtes flexibles Element, zum Beispiel eine Schraubendruckfeder, oder in Form eines hydraulischen oder pneumatischen Hubkolbensystems realisiert werden kann.

Um eine bauliche Einheit zu bilden, können das Betätigungsmittel und das Verriegelungsmittel an einer eine Längsmittelachse definierenden gemeinsamen Welle ausgebildet sein.

Grundsätzlich ist eine Ausführungsform denkbar, bei welcher das Betätigungsmittel mindestens einen von der Welle radial nach außen ragenden Nocken umfasst. Durch axiale Translation der Welle, d.h. durch Bewegung der Welle entlang ihrer Längsmittelachse, kann der Nocken entweder mit einem ersten Übertragungsmittel oder mit einem zu diesem in Richtung der Längsmittelachse versetzten zweiten Übertragungsmittel in Eingriff gelangen, um so entweder den ersten Taster oder den zweiten Taster des Signalgebers selektiv zu betätigen.

Bevorzugt ist die Welle jedoch eine um die Längsmittelachse drehbare Drehwelle, an welcher vorzugsweise zwei Nocken angebracht sind, welche in Richtung der Längsmittelachse gesehen axial beabstandet sind und insbesondere welche um zumindest annähernd 180° versetzt von der Drehwelle radial abstehen, so dass die Nocken gewissermaßen zumindest annähernd um 180° wechselständig an der Drehwelle angeordnet sind. Mit anderen Worten weisen die Nocken in entgegengesetzte Richtungen, oder noch anders ausgedrückt sind die beiden Nocken in einer Ebene ausgerichtet, welche sich durch die Längsmittelachse der Welle und die beiden Nocken erstreckt.

Dem oder jedem Nocken kann ein Übertragungsmittel in Form eines reversibel auslenkbaren, insbesondere zweiseitigen, Übertragungshebels zugeordnet sein. Es versteht sich, dass ein Abstand zwischen den Nocken bzw. zwischen den Übertragungshebeln in Richtung der Längsmittelachse der Welle gesehen für einen vielseitigeren Einsatz der Vorrichtung an die jeweilige Ausgestaltung und insbesondere an einen Abstand zwischen dem ersten und zweiten Taster des Signalgebers angepasst werden kann.

Um die Signalgeberaufnahme zu verriegeln kann das Verriegelungsmittel in eine Aussparung der Signalgeberaufnahme eintauchen. Gemäß einer vorteilhaften Ausgestaltung erstreckt sich das Verriegelungsmittel zumindest annähernd rechtwinklig zu wenigstens einem der Nocken und insbesondere auf einer Seite der Ebene, welche durch die Längsmittelachse der Welle und die beiden von der Welle radial abstehenden Nocken aufgespannt wird. Mit anderen Worten ragt das Verriegelungsmittel auf einer Seite dieser Ebene von der Welle radial nach außen. Dabei kann das Verriegelungsmittel in Richtung quer zu der Längsmittelachse der Welle, insbesondere bedingt durch die halbseitige Erstreckung bezüglich der durch die Längsmittelachse der Welle sowie die Nocken verlaufenden Ebene, zumindest annähernd halbkreisförmig ausgebildet sein bzw. eine halbrunde Form aufweisen. Es versteht sich, dass das Verriegelungsmittel auch eine nicht runde Form, insbesondere eine polygonale Form, aufweisen kann.

Vorteilhaft ist, wenn eine aktuelle Stellung des Betätigungsmittels und des Verriegelungsmittels bekannt ist. Zu diesem Zweck kann die Vorrichtung einen Stellungssensor zur Detektion einer Stellung, insbesondere einer Drehstellung der Welle, aufweisen. Dabei kann es ausreichen, lediglich die Stellung entweder des Betätigungsmittels oder des Verriegelungsmittels zu kennen, da aufgrund der baulichen Einheit von Betätigungsmittel und Verriegelungsmittel auf die Stellung des jeweils anderen zurückgeschlossen werden kann. Somit genügt zur Erfassung der Stellung von Betätigungsmittel und Verriegelungsmittel lediglich ein Stellungssensor, wodurch sich Materialkosten einsparen lassen.

Vorzugsweise ist der Stellungssensor dem Verriegelungsmittel zugeordnet, wobei die Stellung anhand eines an dem Verriegelungsmittel vorgesehenen Gegenelements erfasst wird. Es versteht sich, dass der Stellungssensor auch dem Betätigungsmittel zugeordnet sein kann. Überdies kann sowohl dem Betätigungsmittel als auch dem Verriegelungsmittel jeweils ein Stellungssensor zugeordnet sein.

Bevorzugt ist der Stellungssensor ein Magnetfeldsensor, insbesondere ein Hall-Effekt-Sensor, wobei dann das Gegenelement ein Magnet ist. Es ist aber auch denkbar die Stellung des Verriegelungsmittels mittels eines induktiven Sensors oder eines kapazitiven Sensors zu erfassen, wobei das Gegenelement dann ein elektrisch leitfähiges Material ist.

Zur Bewegung der Welle kann ein Antrieb vorgesehen sein, dessen Antriebsachse zumindest annähernd rechtwinklig zur Längsmittelachse der Welle ausgerichtet ist.

Damit der Signalgeber aus der Signalgeberaufnahme entnehmbar ist, um beispielsweise eine Wegfahrsperre des Kraftfahrzeugs zu entriegeln oder einen Motor des Kraftfahrzeugs zu starten, kann die Signalgeberaufnahme zwischen einer Offen-Stellung und einer Geschlossen-Stellung um eine Schwenkachse verschwenkbar sein, insbesondere wobei die Schwenkachse und die Längsmittelachse der Welle zumindest annähernd rechtwinklig zueinander ausgerichtet sein können.

Nachfolgend wird die Erfindung rein beispielhaft anhand einer möglichen Ausführungsform unter Bezugnahme auf die beigefügten Zeichnungen beschrieben. Es zeigen:
- Fig. 1: eine perspektivische Ansicht einer erfindungsgemäßen Vorrichtung ohne Abdeckung; und
- Fig. 2: eine Schnittansicht der Vorrichtung von Fig.1 mit Abdeckung.

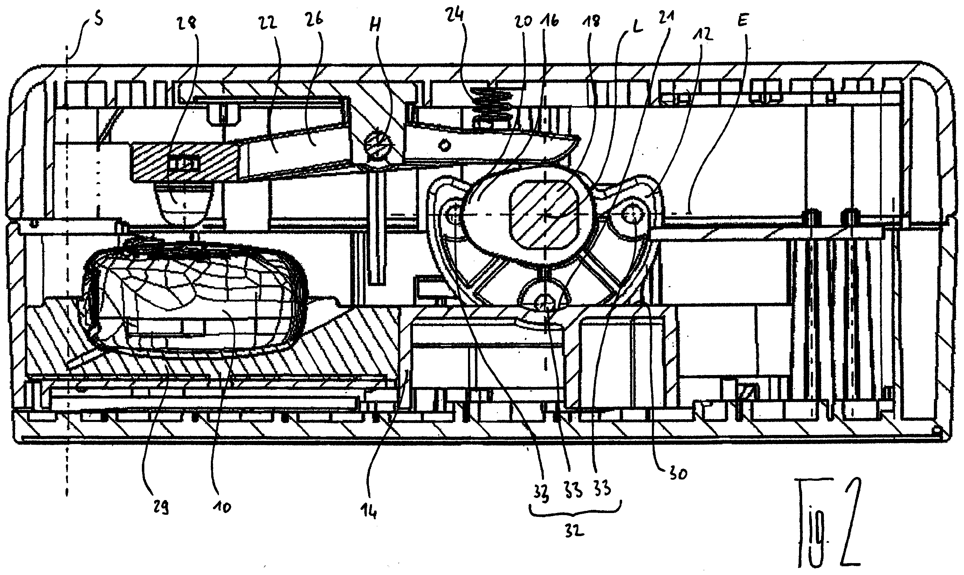

Die Figuren zeigen eine Vorrichtung zum Betätigen eines Signalgebers 10 (Funkschlüssel in Fig. 2) mit einer mittels eines Verriegelungsmittels 12 verriegelbaren Signalgeberaufnahme 14 zur Aufnahme des Signalgebers 10 und einem Betätigungsmittel 16 zur Betätigung des in der Signalgeberaufnahme 14 aufgenommenen Signalgebers 10 (Fig. 2). Die Vorrichtung dient beispielsweise in einem Kraftfahrzeug zur Betätigung des in der Signalgeberaufnahme 14 aufgenommenen Signalgebers 10 auf der Grundlage von Signalen eines nicht dargestellten virtuellen Schlüssels, zum Beispiel eines Mobiltelefons, um hierdurch ein nicht gezeigtes Türschloss des Kraftfahrzeugs entweder zu entriegeln oder zu verriegeln.

Das Betätigungsmittel 16 und das Verriegelungsmittel 14 bilden eine bauliche Einheit, indem sie an einer gemeinsamen Welle 18 ausgebildet sind, welche eine Längsmittelachse L definiert. In dem dargestellten Ausführungsbeispiel handelt es sich bei der Welle 18 konkret um eine Drehwelle, so dass das Betätigungsmittel 16 und das Verriegelungsmittel 14 um die Längsmittelachse L drehen können.

Das Betätigungsmittel 16 umfasst mindestens einen von der Welle 18 radial nach außen ragenden Nocken 20. In dem dargestellten Ausführungsbeispiel umfasst das Betätigungsmittel 16 zwei Nocken 20, welche in Richtung der Längsmittelachse L der Welle 18 gesehen axial beabstandet sind und welche um 180° versetzt von der Drehwelle radial abstehen. Gemeinsam mit der Längsmittelachse L spannen die Nocken 20 eine Ebene E auf.

Damit die Nocken 20 bei einer Rotation der Welle 18 nicht mit der Signalgeberaufnahme 14 in Kontakt gelangen weist die Signalgeberaufnahme 14 eine der Welle 18 zugewandte Nut 21 auf.

Jedem Nocken 20 ist ein Übertragungsmittel 22 in Form eines entgegen einer Federkraft einer Feder 24 reversibel auslenkbaren zweiseitigen Übertragungshebels 26 zugeordnet (Fig. 2), wobei in Fig. 2 aufgrund der Lage der Schnittebene durch die Vorrichtung lediglich ein Nocken 20 sowie ein Übertragungshebel 26 zu sehen sind. Die Übertragungshebel 26 sind jeweils zwischen dem Betätigungsmittel 16, d.h. den Nocken 20, und der Signalgeberaufnahme 14 bzw. dem in der Signalgeberaufnahme 14 aufgenommenen Signalgeber 10 angeordnet und um eine zumindest annähernd parallel zur Längsmittelachse L der Welle 18 verlaufende Hebelachse H drehbar gelagert.

Auf einer der Signalgeberaufnahme 14 zugewandten Seite umfasst jeder Übertragungshebel 26 einen Drückervorsprung 28, welcher vorzugsweise aus einem elastischen sowie einen Widerstand entgegensetzenden Material, wie zum Beispiel Gummi, bestehet und welcher dazu dient bei einer Auslenkung des Übertragungshebels 26 durch das Betätigungsmittel 16 einen Taster des Signalgebers zu drücken.

Die Signalgeberaufnahme 14 weist eine an die Gestalt des Signalgebers 10 angepasste, insbesondere zu der Signalgeberaufnahme 14 separate, Schale 29 auf, mittels welcher der Signalgeber 10 bezüglich der Drückervorsprünge 28 eindeutig ausrichtbar ist. Durch die austauschbare sowie an die individuelle Gestaltung eines Signalgebers 10 anpassbare Schale 29 kann den je nach Hersteller und/oder Kraftfahrzeugmodell unterschiedlich gestalteten Signalgebern 10 Rechnung getragen werden.

Das zur Verriegelung der Signalgeberaufnahme 14 dienende Verriegelungsmittel 12 erstreckt sich im Wesentlichen auf einer Seite der Ebene E (Fig. 2) von der Welle 18 radial nach außen. Dabei weist das Verriegelungsmittel 12 quer zur Längsmittelachse L der Welle 18 eine zumindest annähernd halbkreisförmige Gestalt auf.

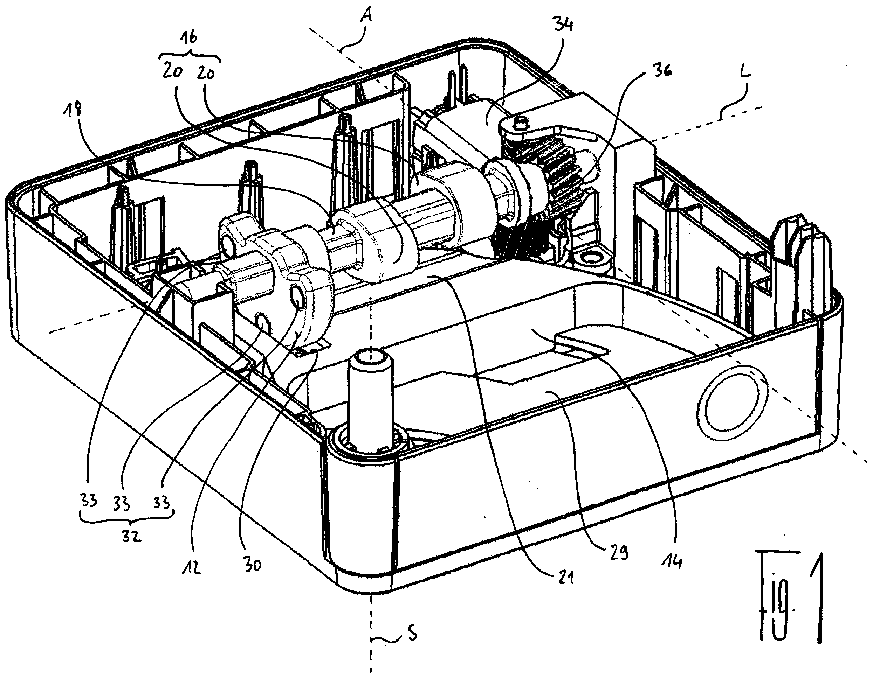

Zum Verriegeln der Signalgeberaufnahme 14 taucht das Verriegelungsmittel 12 in einer in Fig. 1 und 2 gezeigten Verriegelungsstellung des Verriegelungsmittels 12 in eine in der Signalgeberaufnahme 14 vorgesehenen Aussparung 30 ein. In einer Entriegelungsstellung, in welcher das Verriegelungsmittel 12 nicht mehr in die Aussparung 30 der Signalgeberaufnahme 14 eintaucht, kann die Signalgeberaufnahme 14 aus einer in Fig. 1 und 2 gezeigten Geschlossen-Stellung in eine Offen-Stellung bewegt werden. Dabei wird die Signalgeberaufnahme 14 um eine Schwenkachse S, welche zumindest annähernd rechtwinklig zur Längsmittelachse L der Welle 18 ausgerichtet ist, aus der Geschlossen-Stellung in die Offen-Stellung verschwenkt.

An dem Verriegelungsmittel 14 ist ferner ein Gegenelement 32 vorgesehen, welches zusammen mit einem in den Figuren nicht erkennbaren Stellungssensor zur Detektion einer Stellung des Verriegelungsmittels 14 dient. Aufgrund der baulichen Einheit von Verriegelungsmittel 14 und Betätigungsmittel 16 kann über die Stellung des Verriegelungsmittels 14 auch auf die Stellung des Betätigungsmittels 16 zurückgeschlossen werden. In dem dargestellten Ausführungsbeispiel wird die Stellung des Verriegelungsmittels anhand eines Hall-Effekt-Sensors erfasst, wobei das Gegenelement 32 konkret drei an dem Verriegelungselement 14 angebrachte Magnete 33 umfasst, wovon zwei in der Verriegelungsstellung des Verriegelungsmittels 14 in der Ebene E liegen und der dritte Magnet 33 beabstandet zu der Ebene E sowie mittig bezüglich der beiden in der Ebene E liegenden Magneten 33 angeordnet ist.

Zur gemeinsamen Bewegung, insbesondere Drehbewegung, von Betätigungsmittel 16 und Verriegelungsmittel 14 ist ein in Fig. 1 dargestellter Antrieb 34, hier in Form eines Elektromotors, vorgesehen, dessen Drehbewegung mittels eines Schneckengetriebes 36 auf die Welle 18 übertragen wird, wobei eine Antriebsachse A des Antriebs 34 zumindest annähernd rechtwinklig zur Längsmittelachse L der Welle 18 ausgerichtet ist. Insbesondere sind die Längsmittelachse L der Welle 18, die Antriebsachse A des Antriebs 34 und die Schwenkachse S der Signalgeberaufnahme 14 jeweils rechtwinklig zueinander ausgerichtet. Hierdurch wird ein besonders kompakter Aufbau der Vorrichtung erreicht.

Nachfolgend wird ausgehend von der in Fig. 1 und 2 dargestellten Verriegelungsstellung des Verriegelungsmittels 12 ein Betätigungsvorgang eines Signalgebers 10 erläutert. Eine nicht dargestellte Kommunikationseinheit der Vorrichtung empfängt ein autorisiertes Signal zum Entriegeln des Türschlosses von einem virtuellen Schlüssel. Daraufhin verdreht der Antrieb 34 die Welle 18 um zumindest annähernd 180° aus der Verriegelungsstellung in die Entriegelungsstellung des Verriegelungsmittels 12, wobei mittels des Stellungssensors sowie der an dem Verriegelungsmittel 12 angebrachten Magnete 33 erfasst wird, ob sich das Verriegelungsmittel 12 tatsächlich in der Entriegelungsstellung befindet.

Während der Verdrehung der Welle 18 aus der Verriegelungsstellung in die Entriegelungsstellung des Verriegelungsmittels 12 wird ein erster der Übertragungshebel 26 durch einen ersten der Nocken 20 entgegen der Federkraft der Feder 24 maximal ausgelenkt, wenn die Welle 18 eine bezüglich der Verriegelungsstellung des Verriegelungsmittel 12 um zumindest annähernd 90° verdrehte Drehstellung erreicht hat. Durch die maximale Auslenkung des ersten Übertragungshebels 26 wird ein dem Signalgeber 10 zugewandter Hebelarm des ersten Übertragungshebels 26 in Richtung des Signalgebers 10 ausgelenkt, wodurch der an dem Hebelarm angebrachte Drückervorsprung 28 mit einem Entriegelungstaster (erster Taster) des Signalgebers 10 in Eingriff gelangt. Bei Betätigung des Entriegelungstasters wird von dem Signalgeber 10 ein Signal zum Entriegeln des Türschlosses ausgesendet, so dass sich eine Tür des Kraftfahrzeugs öffnen lässt.

Da das Verriegelungsmittel 12 in der Entriegelungsstellung nicht mehr in die Aussparung 30 der Signalgeberaufnahme 14 eintaucht, kann nach Aufschwenken der Signalgeberaufnahme 14 der Signalgeber 10 zum Entriegeln einer Wegfahrsperre und/oder zum Starten eines Motors des Kraftfahrzeugs entnommen werden.

Benötigt ein Benutzer des Kraftfahrzeugs den Signalgeber 10 nicht mehr, so kann der Signalgeber 10 wieder in die Signalgeberaufnahme 14 eingelegt werden. Nach Verlassen des Kraftfahrzeugs kann mit Hilfe eines entsprechenden Signals von dem virtuellen Schlüssel das Türschloss des Kraftfahrzeus verriegelt werden, indem die Welle 18 um zumindest annähernd 180° in dieselbe Drehrichtung weiterverdreht wird, wobei das Verriegelungsmittel 12 aus der Entriegelungsstellung wieder in die Verriegelungsstellung gelangt. Dabei wird bei einer bezüglich der Entriegelungsstellung des Verriegelungsmittels 12 um zumindest annähernd 90° verdrehten Drehstellung der Welle 18 ein zweiter der Übertragungshebel 26 mittels eines zweiten der Nocken 20 maximal ausgelenkt, wodurch ein dem Signalgeber 10 zugewandter Hebelarm des zweiten Übertragungshebels 26 in Richtung des Signalgebers 10 maximal ausgelenkt wird. Hierdurch gelangt der an dem Hebelarm des zweiten Übertragungshebels 26 angebrachte Drückervorsprung 28 mit einem Verriegelungstaster (zweiter Taster) des Signalgebers 10 in Eingriff, was die Aussendung eines Signals zum Verriegeln des Türschlosses zur Folge hat. Es sei angemerkt, dass bei einer Verdrehung der Welle 18 um zumindest annähernd 90° das Verriegelungsmittel 12 aufgrund seiner halbkreisförmigen Gestaltung bereits wieder in die Aussparung 30 der Signalgeberaufnahme 14 eintaucht und diese verriegelt.

Überdies ist auch denkbar, dass die Welle 18 zum Entriegeln des Türschlosses des Kraftfahrzeugs nicht um zumindest annähernd 180°, sondern lediglich um zumindest annähernd 90° bezüglich der Verriegelungsstellung des Verriegelungsmittels 12 verdreht wird. Dadurch wird der erste Übertragungshebel 26 maximal ausgelenkt, so dass der Entriegelungstaster des Signalgebers 10 betätigt wird, wobei das Verriegelungsmittel 12 aufgrund seiner halbkreisförmigen Gestalt weiterhin in die Aussparung 30 der Signalgeberaufnahme 14 eintaucht, so dass diese nach wie vor verriegelt ist. Eine derartige Betätigung des Signalgebers 10 kann beispielsweise wünschenswert sein, wenn ein Benutzer im Inneren des Kraftfahrzeugs etwas liegen lassen hat, was er eben noch herausholen möchte, ohne das Kraftfahrzeug bewegen zu wollen. Es versteht sich, dass sich die Signalgeberaufnahme 14 entriegeln lässt, wenn die Welle 18 um zumindest annähernd 90° weiter verdreht wird.

Ferner sei angemerkt, dass die Welle 18 zum Verriegeln des Türschlosses nicht notwendigerweise in dieselbe Richtung weitergedreht werden muss. Vielmehr kann die Welle 18 zum Verriegeln auch in eine zu der ursprünglichen Drehrichtung entgegengesetzten Drehrichtung zurückgedreht werden, nämlich um 270° gegenüber der Entriegelungsstellung des Verriegelungsmittels 12, wobei der Entriegelungstaster nochmals betätigt wird, bevor der Verriegelungstaster zum Verriegeln des Türschlosses betätigt wird. Eine anschließende Verdrehung der Welle 18 um 90° in die ursprüngliche Drehrichtung bewirkt, dass sich das Verriegelungsmittel 12 wieder in der Verriegelungsstellung befindet, in welcher die Signalgeberaufnahme 14 verriegelt ist. In analoger Weise kann auch ein Entriegelungsvorgang erfolgen.

### Bezugszeichenliste

- 10: Signalgeber
- 12: Verriegelungsmittel
- 14: Signalgeberaufnahme
- 16: Betätigungsmittel
- 18: Welle
- 20: Nocken
- 21: Nut
- 22: Übertragungsmittel
- 24: Feder
- 26: Übertragungshebel
- 28: Drückervorsprung
- 29: Schale
- 30: Aussparung
- 32: Gegenelement
- 33: Magnet
- 34: Antrieb
- 36: Schneckengetriebe

- A: Antriebsachse
- H: Hebelachse
- L: Längsmittelachse
- S: Schwenkachse

## Patentansprüche

1. Vorrichtung zum Betätigen eines Signalgebers (10), insbesondere eines Funkschlüssels eines Kraftfahrzeugs, mit
einer zwischen einer Geschlossen-Stellung und einer Offen-Stellung bewegbaren Signalgeberaufnahme (14) zur Aufnahme des Signalgebers (10), einem Betätigungsmittel (16) zur Betätigung des in der Signalgeberaufnahme (14) aufnehmbaren Signalgebers (10), und
einem Verriegelungsmittel (12) zur Verriegelung der Signalgeberaufnahme (14) in der Geschlossen-Stellung,
**dadurch gekennzeichnet, dass**
das Betätigungsmittel (16) und das Verriegelungsmittel (12) eine bauliche Einheit bilden.

2. Vorrichtung nach Anspruch 1,
**gekennzeichnet durch**
ein Übertragungsmittel (22), welches zwischen das Betätigungsmittel (16) und die Signalgeberaufnahme (14), insbesondere zwischen das Betätigungsmittel (16) und den in der Signalgeberaufnahme (14) aufnehmbaren Signalgeber (10), geschaltet ist.

3. Vorrichtung nach Anspruch 1 oder 2,
**dadurch gekennzeichnet, dass**
das Betätigungsmittel (16) und das Verriegelungsmittel (12) an einer eine Längsmittelachse (L) definierenden gemeinsamen Welle (18) ausgebildet sind.

4. Vorrichtung nach Anspruch 3,
**dadurch gekennzeichnet, dass**
die Welle (18) eine um die Längsmittelachse (L) drehbare Drehwelle ist.

5. Vorrichtung nach Anspruch 3 oder 4,
**dadurch gekennzeichnet, dass**
das Betätigungsmittel (16) mindestens einen von der Welle (18) radial nach außen ragenden Nocken (22) umfasst.

6. Vorrichtung nach zumindest einem der Ansprüche 3 bis 5,
**gekennzeichnet durch**
zwei Nocken (22), welche in Richtung der Längsmittelachse (L) der Welle (18) gesehen axial beabstandet sind und welche um zumindest annähernd 180° versetzt von der Welle (18) radial abstehen.

7. Vorrichtung nach Anspruch 5 oder 6
**dadurch gekennzeichnet, dass**
dem oder jedem Nocken (22) ein Übertragungsmittel (22) in Form eines reversibel auslenkbaren, insbesondere zweiseitigen, Übertragungshebels (26) zugeordnet ist.

8. Vorrichtung nach Anspruch 6 oder 7,
**dadurch gekennzeichnet, dass**
eine Ebene (E) durch die Längsmittelachse (L) der Welle (18) und zwei von der Welle (18) radial abstehende Nocken (22) aufgespannt ist und sich das Verriegelungsmittel (12) im Wesentlichen auf einer Seite der Ebene (E) erstreckt.

9. Vorrichtung nach zumindest einem der Ansprüche 3 bis 8,
**dadurch gekennzeichnet, dass**
das Verriegelungsmittel (12) von der Welle (18) radial nach außen ragt und halbkreisförmig ausgebildet ist.

10. Vorrichtung nach zumindest einem der vorstehenden Ansprüche,
**dadurch gekennzeichnet, dass**
das Verriegelungsmittel (12) zur Verriegelung der Signalgeberaufnahme (14) in eine Aussparung (30) der Signalgeberaufnahme (14) eintaucht.

11. Vorrichtung nach zumindest einem der vorstehenden Ansprüche,
**gekennzeichnet durch**
einen Stellungssensor zur Detektion einer Stellung von Betätigungsmittel (16) und Verriegelungsmittel (12).

12. Vorrichtung nach Anspruch 11,
**dadurch gekennzeichnet, dass**
der Stellungssensor die Stellung anhand eines an dem Verriegelungsmittel (12) vorgesehenen Gegenelements (32) erfasst.

13. Vorrichtung nach zumindest einem Ansprüche 3 bis 12,
**gekennzeichnet durch**
einen Antrieb (34), dessen Antriebsachse (A) zumindest annähernd rechtwinklig zur Längsmittelachse (L) der Welle (18) ausgerichtet ist.

14. Vorrichtung nach zumindest einem der Ansprüche 3 bis 12,
**dadurch gekennzeichnet, dass**
die Signalgeberaufnahme (14) um eine Schwenkachse (S) zwischen der Offen-Stellung und der Geschlossen-Stellung verschwenkbar ist, insbesondere wobei die Schwenkachse (S) und die Längsmittelachse (L) der Welle zumindest annähernd rechtwinklig zueinander ausgerichtet sind.

## Claims

1. An apparatus for actuating a signal generator (10), in particular a radio key of a motor vehicle, comprising
a signal generator receiver (14), movable between a closed position and an open position, for receiving the signal generator (10);
an actuation means (16) for actuating the signal generator (10) receivable in the signal generator receiver (14); and
a locking means (12) for locking the signal generator receiver (14) in the closed position,
**characterized in that**
the actuation means (16) and the locking means (12) form a structural unit.

2. An apparatus in accordance with claim 1,
**characterized by**
a transmission means (22) which is connected between the actuation means (16) and the signal generator receiver (14), in particular between the actuation means (16) and the signal generator (10) receivable in the signal generator receiver (14).

3. An apparatus in accordance with claim 1 or claim 2,
**characterized in that**
the actuation means (16) and the locking means (12) are formed at a common shaft (18) defining a longitudinal central axis (L).

4. An apparatus in accordance with claim 3,
**characterized in that**
the shaft (18) is a rotation shaft rotatable about the longitudinal central axis (L).

5. An apparatus in accordance with claim 3 or claim 4,
**characterized in that**
the actuation means (16) comprises at least one cam (22) projecting radially outwardly from the shaft (18).

6. An apparatus in accordance with at least one of the claims 3 to 5,
**characterized by**
two cams (22) which are axially spaced apart, viewed in the direction of the longitudinal central axis (L) of the shaft (18), and which project radially from the shaft (18) offset by at least approximately 180°.

7. An apparatus in accordance with claim 5 or claim 6,
**characterized in that**
a transmission means (22) in the form of a reversibly deflectable transmission lever (26) which in particular has two sides is associated with the or each cam (22).

8. An apparatus in accordance with claim 6 or claim 7,
**characterized in that**
a plane (E) is spanned by the longitudinal central axis (L) of the shaft (18) and by two cams (22) projecting radially from the shaft (18); and **in that** the locking means (12) extends substantially at one side of the plane (E).

9. An apparatus in accordance with at least one of the claims 3 to 8,
**characterized in that**
the locking means (12) projects radially outwardly from the shaft (18) and is semicircular.

10. An apparatus in accordance with at least one of the preceding claims,
**characterized in that**
the locking means (12) for locking the signal generator receiver (14) dips into a cut-out (30) of the signal generator receiver (14).

11. An apparatus in accordance with at least one of the preceding claims,
**characterized by**
a position sensor for detecting a position of the actuation means (16) and of the locking means (12).

12. An apparatus in accordance with claim 11,
**characterized in that**
the position sensor detects the position by means of a counter-element (32) provided at the locking means (12).

13. An apparatus in accordance with at least one of the claims 3 to 12,
**characterized by**
a drive (34) whose drive axis (A) is aligned at least approximately at a right angle to the longitudinal central axis (L) of the shaft (18).

14. An apparatus in accordance with at least one of the claims 3 to 12,
**characterized in that**
the signal generator receiver (14) is pivotable about a pivot axis (S) between the open position and the closed position, in particular with the pivot axis (S) and the longitudinal central axis (L) of the shaft being aligned at least approximately at a right angle to one another.

## Revendications

1. Dispositif d'actionnement d'un émetteur de signaux (10), en particulier d'une clé à radiocommande d'un véhicule automobile, comportant
un logement à émetteur de signaux (14) mobile entre une position fermée et une position ouverte et destiné à loger l'émetteur de signaux (10),
un moyen d'actionnement (16) pour actionner l'émetteur de signaux (10) susceptible d'être logé dans le logement à émetteur de signaux (14), et
un moyen de verrouillage (12) pour verrouiller le logement à émetteur de signaux (14) dans la position fermée,
**caractérisé en ce que**
le moyen d'actionnement (16) et le moyen de verrouillage (12) forment une unité structurelle.

2. Dispositif selon la revendication 1,
**caractérisé par**
un moyen de transmission (22) qui est branché entre le moyen d'actionnement (16) et le logement à émetteur de signaux (14), en particulier entre le moyen d'actionnement (16) et l'émetteur de signaux (10) susceptible d'être logé dans le logement à émetteur de signaux (14).

3. Dispositif selon la revendication 1 ou 2,
**caractérisé en ce que**
le moyen d'actionnement (16) et le moyen de verrouillage (12) sont réalisés sur un arbre commun (18) qui définit un axe médian longitudinal (L).

4. Dispositif selon la revendication 3,
**caractérisé en ce que**
l'arbre (18) est un arbre de rotation tournant autour de l'axe médian longitudinal (L).

5. Dispositif selon la revendication 3 ou 4,
**caractérisé en ce que**
le moyen d'actionnement (16) comprend au moins une came (22) qui fait saillie de l'arbre (18) radialement vers l'extérieur.

6. Dispositif selon l'une au moins des revendications 3 à 5,
**caractérisé par**
deux cames (22) qui, vues en direction de l'axe médian longitudinal (L) de l'arbre (18), sont espacées axialement et font saillie radialement de l'arbre (18) en étant décalées d'au moins approximativement 180°.

7. Dispositif selon la revendication 5 ou 6,
**caractérisé en ce que**
un moyen de transmission (22) sous la forme d'un levier de transmission (26) à déviation réversible, en particulier bilatéral, est associé à la ou à chaque came (22).

8. Dispositif selon la revendication 6 ou 7,
**caractérisé en ce que**
un plan (E) est défini par l'axe médian longitudinal (L) de l'arbre (18) et par deux cames (22) qui font saillie radialement de l'arbre (18), et
le moyen de verrouillage (12) s'étend sensiblement sur un côté du plan (E).

9. Dispositif selon l'une au moins des revendications 3 à 8,
**caractérisé en ce que**
le moyen de verrouillage (12) fait saillie de l'arbre (18) radialement vers l'extérieur et est réalisé en forme de demi-cercle.

10. Dispositif selon l'une au moins des revendications précédentes,
**caractérisé en ce que**
le moyen de verrouillage (12) plonge dans une échancrure (30) du logement à émetteur de signaux (14) pour verrouiller le logement à émetteur de signaux (14).

11. Dispositif selon l'une au moins des revendications précédentes,
**caractérisé par**
un capteur de position pour détecter une position du moyen d'actionnement (16) et du moyen de verrouillage (12).

12. Dispositif selon la revendication 11,
**caractérisé en ce que**
le capteur de position détecte la position en se basant sur un élément antagoniste (32) prévu sur le moyen de verrouillage (12).

13. Dispositif selon l'une au moins des revendications 3 à 12,
**caractérisé par**
un entraînement (34) dont l'axe d'entraînement (A) est orienté au moins approximativement à angle droit par rapport à l'axe médian longitudinal (L) de l'arbre (18).

14. Dispositif selon l'une au moins des revendications 3 à 12,
**caractérisé en ce que**
le logement à émetteur de signaux (14) est mobile en pivotement autour d'un axe de pivotement (S) entre la position ouverte et la position fermée, en particulier l'axe de pivotement (S) et l'axe médian longitudinal (L) de l'arbre étant orientés au moins approximativement à angle droit l'un par rapport à l'autre.
